# EUROPÄISCHE PATENTSCHRIFT

(11) **EP 2 169 635 B1**
(45) Veröffentlichungstag und Bekanntmachung des Hinweises auf die Patenterteilung: **09.11.2016**
(21) Anmeldenummer: 09169900.9
(22) Anmeldetag: 10.09.2009
(51) Int. Cl.: B60W 50/04, G07C 5/00, G07C 5/08

(54) **Datenschreiber, Fahrerassistenzsystem und Verfahren zur Identifikation von kritischen Fahrsituationen**
Data recorder, driver assistance system and method for identifying critical driving situations
Dispositif de saisie de données, système d'assistance au conducteur et procédé d'identification de situations de conduite critiques

(30) Priorität: 18.09.2008 DE 102008047727
(43) Veröffentlichungstag der Anmeldung: 31.03.2010
(73) Patentinhaber: FSD Fahrzeugsystemdaten GmbH, 01307 Dresden (DE)
(72) Erfinder: Bönninger, Jürgen, 01326, Dresden (DE); van Calker, Jörg, 01309, Dresden (DE); Müller, Burkhard, 01309, Dresden (DE); Prof. Trautmann, Toralf, 01189, Dresden (DE); Staffetius, Tino, 01237, Dresden (DE)
(74) Vertreter: Michalski Hüttermann & Partner Patentanwälte mbB

(56) Entgegenhaltungen:
- WO-A-01/51891
- DE-A1- 4 221 280
- DE-A1- 10 029 401
- DE-A1- 19 700 353
- DE-A1-102004 015 222
- US-A1- 2007 219 685

## Beschreibung

Die Erfindung betrifft einen Datenschreiber zur Aufzeichnung von kritischen Fahrsituationen und/oder kritischen Zuständen, Veränderungen und Ereignissen von und an Komponenten eines Kraftfahrzeugs und/oder Anhängers, ein Fahrerassistenzsystem zur Unterstützung des Fahrers eines Kraftfahrzeugs und/oder eines Kraftfahrzeugzuges, bei dem ein Anhänger mit einem Kraftfahrzeug verbunden ist, insbesondere bei kritischen Fahrsituationen, sowie ein Verfahren zur Identifikation von kritischen Fahrsituationen eines Kraftfahrzeugs.

Aus DE 197 17 226 A1 ist ein Datenschreiber zur Aufzeichnung von kritischen Fahrsituationen eines Kraftfahrzeugs bekannt, bei dem ein Auslösemittel vorgesehen ist, das bei Erreichung eines bestimmten Schwellwerts eines gemessenen Kraftfahrzeugparameters eine Aufzeichnung von für eine Fahrsituation relevanten Messdaten eines Sensorsystems auslöst. Dies ermöglicht es bei einem Unfall objektiv gemessene Messdaten zur Verfügung zu haben, um die Schuldfrage eines Unfalls eindeutig klären zu können.

Nachteilig bei einem derartigen Datenschreiber ist, dass die Schwellwerte sehr sorgfältig gewählt sein müssen, da anderenfalls bei einem zu niedrig gewählten Schwellwert zu viele Speichervorgänge ausgelöst werden und bei einem tatsächlich stattfindenden Unfall kein Speicherplatz mehr verbleibt oder bei einem zu hoch eingestellten Schwellwert selbst bei einem Unfall eine Datenspeicherung nicht ausgelöst wird. Es hat sich gezeigt, dass eine optimale Schwellwerteinstellung extrem schwierig ist und in der überwiegenden Anzahl der Fälle nicht funktioniert hat. Eine korrekte und insbesondere valide Identifikation einer kritischen Fahrsituation ist dadurch, sofern überhaupt, nur äußerst schwierig und unzureichend möglich. Die gleiche Problematik ergibt sich bei Fahrerassistenzsystemen, die bei einer identifizierten kritischen Fahrsituation unterstützende Maßnahmen einleiten sollen, wobei eine unpräzise und nicht valide Identifikation einer kritischen Fahrsituation nicht nur nicht nützt sondern sogar gefährliche Fahrsituationen erst entstehen lassen kann.

Aus DE 10 2004 015222 A1 ist ein Datenschreiber bekannt, der eine Erfassungseinheit zum Erfassen von fahrertypischen Beschleunigungsverläufen sowie eine lernfähige Einrichtung zum Aktualisieren der in einem Referenzspeicher gespeicherten Beschleunigungsverläufe aufweist. Die lernfähige Einrichtung aktualisiert dabei die gespeicherten Beschleunigungsverläufe basierend auf den durch die Erfassungseinheit erfassten fahrertypischen Beschleunigungsverläufen. Die lernfähige Einrichtung speichert und interpoliert über einen Zeitraum die auftretenden Beschleunigungsverläufe und bildet daraus immer wieder neue Schwellwerte, die nicht überschritten werden dürfen, ohne dass eine Speicherung der Messwerte ausgelöst wird.

Es ist die Aufgabe der Erfindung einen Datenschreiber, ein Fahrerassistenzsystem sowie ein Verfahren zur Identifikation von kritischen Fahrsituationen eines Kraftfahrzeugs und/oder zur Adaption an kritischen Fahrsituationen eines Kraftfahrzeugs zu schaffen, bei denen diese kritischen Fahrsituationen und/oder kritischen Zustände, Veränderungen und Ereignisse von und an Komponenten eines Kraftfahrzeugs und/oder Anhängers valider identifiziert werden können.

Die Lösung der Aufgabe erfolgt erfindungsgemäß durch einen Datenschreiber mit den Merkmalen des Anspruchs 1, ein Fahrerassistenzsystem mit den Merkmalen des Anspruchs 12 sowie ein Verfahren mit den Merkmalen des Anspruchs 14. Vorteilhafte Ausgestaltungen der Erfindung sind in Unteransprüchen angegeben.

Der erfindungsgemäße Datenschreiber zur Aufzeichnung von kritischen Fahrsituationen und/oder kritischen Zuständen , Veränderungen und Ereignissen von und an Komponenten eines Kraftfahrzeugs und/oder Kraftfahrzeugzuges weist eine Auslöseeinheit zur Auslösung einer Aufzeichnung von für eine Fahrsituation relevanten Messdaten eines Sensorsystems auf. Wenn ein von dem Sensorsystem gemessenes Messdatum oder mehrere von dem Sensorsystem gemessene Messdaten einen dem jeweiligen Messdatum zugeordneten definierten Schwellwert und/oder dem einer Kombination von Messdaten zugeordneten Schwellwert zur Identifizierung einer kritischen Fahrsituation erreicht hat, löst die Auslöseeinheit die Aufzeichnung aus. Zusätzlich ist der mindestens eine Schwellwert in Abhängigkeit der gemessenen Messdaten automatisch an das durchschnittliche Fahrerverhalten anpassbar. Erfindungsgemäß ergeben sich die Schwellwerte losgelöst von anfänglichen Schwellwerten während der Fahrt kontinuierlich aus aktuell gemessenen Parametern als Ergebnis einer permanent fortschreitenden Rechnung auf Basis der gemessenen Parameter und/oder die Schwellwerte sind aus verschiedenen für unterschiedliche mögliche Fahrer hinterlegten Sätze an Schwellwerten ausgewählt und der mindestens eine Schwellwert in Abhängigkeit der gemessenen Messdaten automatisch derart anpassbar ist, dass unter Berücksichtigung eines sich über die gemessenen Messdaten bestimmten individuellen Fahrertypus und basierend auf der Annahme, dass im Wesentlichen unabhängig vom individuellen Fahrertypus die Anzahl kritischer Fahrsituationen im Wesentlichen gleich hoch is, innerhalb eines definierten Intervalls eine voraussichtliche Zielanzahl an Auslösungen der Aufzeichnung erreichbar ist, wobei das Intervall ein Zeitintervall und/oder ein Fahrstreckenintervall ist.

Hierbei wird berücksichtigt, dass ein Fahrer üblicherweise in einem Ausmaß vorsichtig oder aggressiv fährt, bei dem ein zügiges Fahren möglich ist ohne zu viele kritische Fahrsituationen erleben zu müssen. Dieses Verhalten führt dazu, dass im Wesentlichen unabhängig vom individuellen Fahrertypus die Anzahl kritischer Fahrsituationen, insbesondere bezogen auf das Ausmaß der Fahrtätigkeit, im Wesentlichen gleich hoch ist. Ausgehend von dieser Annahme können die Schwellwerte derart angepasst werden, dass eine statistisch begründete Anzahl gefährlicher Fahrsituationen pro Intervall voraussichtlich eingehalten wird. Besonders bevorzugt ist das Intervall ein Zeitintervall und/oder ein Fahrstreckenintervall, das insbesondere in Abhängigkeit der kontinuierlich gemessenen Messdaten, vorzugsweise einer Fahrgeschwindigkeit, gewichtet ist. Dadurch kann beispielsweise berücksichtigt werden, dass ein Fahrer, der im Wesentlichen innerorts fährt und dadurch in einer größeren Zeit eine geringere Fahrstrecke fährt, mehr kritische Fahrsituationen erleben kann als ein Fahrer, der im Wesentlichen auf Autobahnen fährt und in einer kürzeren Zeit eine größere Strecke fährt. Ferner ist es möglich die Schwellwerte, die eine kritische Fahrsituation definieren, an das Fahrerverhalten individuell anzupassen, wobei verschiedene Fahrerprofile, die sich in Fahrkompetenzen und Fahrweisen, beispielsweise defensiv oder dynamisch, unterscheiden berücksichtigt werden können. Bei der Auswahl der kontinuierlich angepassten Schwellwerte wird also der individuelle Fahrertypus, der sich über die gemessenen Messdaten bestimmen lässt, berücksichtigt. Die Anpassung der Schwellwerte kann dabei derart erfolgen, dass nicht nur eine Selektion aus einer endlichen Anzahl von vorgegebenen fixen Schwellwerten vorgenommen wird, sondern, dass sich die Schwellwerte zunehmend losgelöst von den anfänglichen Schwellwerten während der Fahrt kontinuierlich aus den aktuell gemessenen Parametern ergeben. Beispielsweise können die Schwellwerte das Ergebnis einer permanent fortschreitenden Rechnung auf Basis der gemessenen Parameter sein kann, so dass es zu einer Vielzahl von permanent korrigierten Schwellwerten kommt. Ferner können verschiedene Sätze an Schwellwerten für unterschiedliche mögliche Fahrer hinterlegt werden, so dass der jeweilige Fahrer den entsprechenden individuell an sein Fahrverhalten angepassten Satz an Schwellwerten vor der Fahrt auswählen kann. Aufgrund der individuell angepassten Schwellwerte kann berücksichtigt werden, dass für einen Fahrer, der entsprechend vorsichtig fährt, beispielsweise bereits geringere Abweichungen von einem Sollwert eine kritische Fahrsituation kennzeichnen und bei einem Fahrer, der entsprechend dynamisch fährt, beispielsweise auch erhöhte Abweichungen von einem Sollwert noch keine kritische Fahrsituation kennzeichnen. Durch die Subjektivierung der Schwellwerte kann dadurch objektiver und valider eine kritische Fahrsituation identifiziert werden, deren kritischer Charakter je nach Fahrer subjektiv verschieden sein kann. Dies führt insbesondere dazu, dass nur wirklich relevante kritische Fahrsituationen aufgezeichnet werden, so dass es insbesondere möglich ist den zur Verfügung stehenden Speicherplatz optimal zu nutzen. Die Auswertung der aufgezeichneten Messdaten erfolgt dadurch auf einer viel realistischeren Datenbasis, ohne dass unwichtige Daten aufgezeichnet wurden und ohne dass wichtige Daten verloren wurden. Insbesondere lassen sich aus den so aufgezeichneten Messdaten valide statistische Ergebnisse herleiten, die bei Versuchs- oder Simulatorfahrten nur unzulänglich abgebildet werden können. Gleichzeitig ist es möglich die Relevanz und die Auswirkung von Fahrerassistenzsystemen in einer kritischen Fahrsituation zu beurteilen und geeignete Prüfverfahren zu entwickeln, um derartige Fahrerassistenzsysteme anhand valider statistisch relevanter Fahrsituationen in einer geeigneten Weise zu überprüfen. Ferner können die aufgezeichneten kritischen Fahrsituationen mit den gemessenen Messwerten verknüpft werden, um für den jeweiligen Fahrer individuell zu analysieren, wie die kritische Fahrsituation entstanden ist. Dadurch lassen sich Lerneffekte für den Fahrer erzielen, die zu einem besseren Fahrverhalten führen. Insbesondere lassen sich Erkenntnisse über die verwendete Kraftfahrzeugtechnik erzielen, um die unfallverhütende Wirkung der verwendeten Kraftfahrzeugtechnik zu überprüfen und geeignete Prüfverfahren zu entwickeln.

Vorzugsweise ist über die gemessenen Messdaten eine Variation von Effekten von Komponenten des Kraftfahrzeugs in Abhängigkeit von Zeit und/oder Laufleistung des Kraftfahrzeugs bei einem Fremdeingriff und/oder in einer kritischen Fahrsituation berechenbar. Dies ermöglicht es insbesondere den Verschleiß von sicherheitsrelevanten Komponenten, wie beispielsweise Bremsbeläge, Bremsflüssigkeitsmenge und/oder Stossdämpfer, zu messen und deren Veränderung über die Zeit und/oder Laufleistung zu berücksichtigen. Beispielsweise kann im Falle einer Vollbremsung bei neuen Bremsbelägen von einem kürzeren Bremsweg als bei abgenutzten Bremsbelägen ausgegangen werden, so dass sich die Bewertung, ob eine kritische Fahrsituation vorliegt in Abhängigkeit des sich über die Zeit und die Laufleistung verändernden Bremseffekts des Kraftfahrzeugs ändern kann. Gleichzeitig kann berücksichtigt werden, dass Fahrerassistenzsysteme, wie beispielsweise ESP oder ABS, üblicherweise von konstanten Werten für die Effekte von Kraftfahrzeugkomponenten ausgehen, so dass der Fremdeingriff eines Fahrerassistenzsystems basierend auf falschen Annahmen eine noch nicht kritische Fahrsituation erst kritisch machen kann. Beispielsweise kann ein Eingriff eines ESP-Systems bei stark abgenutzten Stossdämpfern ein Schleudern des Kraftfahrzeugs sogar begünstigen. Um negative Effekte durch Fahrerassistenzsysteme zu vermeiden, werden in einer bevorzugten Ausführungsform die gemessenen Messdaten über die Variation von Effekten von Komponenten des Kraftfahrzeugs in Abhängigkeit von Zeit und/oder Laufleistung des Kraftfahrzeugs mindestens einem Fahrerassistenzsystem zur Verfügung gestellt, damit das jeweilige Fahrerassistenzsystem bei seiner Regelung vorgegebene Parameter mit Hilfe während der Fahrt fortschreitend gemessener tatsächlicher Parameter kontinuierlich anpassen und korrigieren kann. Dadurch wird eine instabile Regelung durch das Fahrerassistenzsystem vermieden und der beabsichtigte Regelungseffekt gewährleistet.

Vorzugsweise ist die Auslöseeinheit mit einem Dauerspeicher zur dauerhaften Speicherung der gemessenen Messdaten verbunden. Der Dauerspeicher kann mit einem Kurzzeitspeicher, insbesondere einem Ringspeicher, zur kontinuierlichen Speicherung der Messdaten des Sensorsystems verbunden sein. Der Dauerspeicher kann derart ausgebildet sein, dass der Dauerspeicher bei einer Auslösung durch die Auslöseeinheit Daten von dem Kurzzeitspeicher aufzeichnet, die zeitlich vor der Auslösung im Kurzzeitspeicher gespeichert wurden. In dem Kurzzeitspeicher können somit kontinuierlich die gemessenen Messdaten gespeichert werden, wobei jeweils die ältesten Daten durch die jüngeren Daten überschrieben werden. Wenn eine kritische Fahrsituation identifiziert wird, kann der Dauerspeicher die weiteren gemessenen Messdaten aufzeichnen, um Informationen über die kritische Fahrsituation aufzuzeichnen. Gleichzeitig kann der Dauerspeicher auf die im Kurzzeitspeicher bereits gespeicherten Daten zurückgreifen, die zeitlich vor der Identifizierung der kritischen Fahrsituation liegen. Dadurch ist es möglich sowohl das Entstehen einer kritischen Fahrsituation als auch das Verhalten in der kritischen Fahrsituation und danach in dem Dauerspeicher speichern und auswerten zu können. Beispielsweise können 20 Sekunden vor Identifizierung einer kritischen Fahrsituation und 20 Sekunden nach Identifizierung einer kritischen Fahrsituation beziehungsweise 20 Sekunden nach Ende der kritischen Fahrsituation in dem Dauerspeicher gespeichert werden. Besonders bevorzugt ist der Dauerspeicher als austauschbares Modul ausgestaltet, so dass in regelmäßigen Abständen, beispielsweise wenn der Fahrer zu einer gesetzlich vorgeschriebenen Hauptuntersuchung seines Kraftfahrzeugs antritt, ein neuer Dauerspeicher eingesetzt werden kann. Der Dauerspeicher kann schnell ausgetauscht werden, ohne dass dies zu einer signifikanten zeitlichen Verzögerung der Hauptuntersuchung führt.

Zusätzlich oder alternativ sind die zur Aufzeichnung vorgesehenen Messdaten kabellos übertragbar. Hierzu kann ein geeigneter mit dem Sensorsystem insbesondere über den Dauerspeicher und/oder den Kurzzeitspeicher verbundener Sender vorgesehen sein. Dadurch können die gemessenen Messdaten kabellos zu einen zum Empfang berechtigte Empfänger gesendet werden. Dies erfolgt beispielsweise über eine Funkverbindung, beispielsweise eine Mobilfunkverbindung, die insbesondere über ein Internetportal, die gemessenen Daten online übertragen kann. Die Übertragung kann nach dem Ende der Aufzeichnung und/oder bereits während der Aufzeichnung erfolgen. Die Übertragung kann beispielsweise direkt zu dem Zeitpunkt eingeleitet werden, wenn eine kritische Fahrsituation detektiert wird, die eine Aufzeichnung der gemessenen Messdaten auslöst. Dies ermöglicht eine zeitnahe Auswertung der gemessenen Messdaten. Es ist möglich bereits gesendete Daten zu überschreiben ohne Daten zu verlieren. Ferner kann eine größere Datenmenge verarbeitet und/oder der benötigte Speicherplatz reduziert werden. Insbesondere wenn sämtliche aufgezeichneten Daten sicher übertragen wurden, kann der gesamte Speicherplatz für weitere Aufzeichnungen freigegeben werden.

Vorzugsweise werden eine Vielzahl von Messdaten von dem Sensorsystem gemessen, um möglichst vollständig die kritische Fahrsituation abbilden zu können. Für eine Vielzahl oder alle dieser Messdaten kann ein Schwellwert definiert werden, der einzeln oder in Kombination mit weiteren Schwellwerten für andere Messdaten eine kritische Fahrsituation definieren kann. Insbesondere sind Schwellwerte für die folgenden Parameter des Kraftfahrzeugs definiert: Gierrate und/oder Gierwinkel und/oder Nickrate und/oder Nickwinkel und/oder Wankrate und/oder Wankwinkel und /oder Kraftfahrzeuggeschwindigkeit und/oder Längsbeschleunigung und/oder Querbeschleunigung und/oder Vertikalbeschleunigung und/oder Winkelstellung eines Lenkrads und/oder Winkelgeschwindigkeit des Lenkrads und/oder Winkelbeschleunigung des Lenkrads und/oder Bremspedalstellung und/oder Bremspedalgeschwindigkeit und/oder Bremspedalbeschleunigung und/oder Fahrpedalstellung und/oder Fahrpedalgeschwindigkeit und/oder Fahrpedalbeschleunigung und/oder manuelle Betätigung eines Hilfssystems, insbesondere einer Hupe, und/oder Eingriff eines Fahrerassistenzsystems und/oder globale Positionsdaten und/oder Raddrehzahl der Raddrehzahlsensoren und/oder Motordrehzahl und/oder Motormoment und/oder geschalteter Getriebegang. Beispielsweise kann ein Schleudern des Kraftfahrzeugs als kritische Fahrsituation identifiziert werden, wenn die gemessene Gierrate bei ≥ 40° pro Sekunde liegt. Entsprechendes gilt bei einer Längsbeschleunigung, Querbeschleunigung und/oder Vertikalbeschleunigung von ≥ 4 m/s². Eine weitere kritische Fahrsituation kann identifiziert werden, wenn beispielsweise bei einer Kraftfahrzeuggeschwindigkeit von 50 km/h eine Winkelgeschwindigkeit des Lenkrads von ≥ 400°/s ermittelt wird, da dies ein plötzliches Ausweichen des Kraftfahrzeugs vor einem Hindernis indizieren kann. Auch die Betätigung einer Hupe und/oder eine hohe Bremspedalgeschwindigkeit kann eine kritische Fahrsituation identifizieren. Ebenfalls kann eine kritische Fahrsituation vorliegen, wenn ein Fahrerassistenzsystem eingreift, wobei die Detektion eines Eingriffs eines Fahrerassistenzsystems insbesondere dann eine Aufzeichnung auslösen sollte, wenn das korrekte Verhalten des Fahrerassistenzsystems überprüft werden soll. Über die Raddrehzahl der Raddrehzahlsensoren kann insbesondere mit Hilfe eines Regensensors ein Rutschen und/oder Aquaplaning als kritische Fahrsituation identifiziert werden. Mit Hilfe globaler Positionsdaten kann überprüft werden, ob sich das Kraftfahrzeug an einem besonders unfallträchtigen Ort befindet, dessen Koordinaten hinterlegt sein können, oder ob es sich um eine unebene Straßenstrecke, beispielsweise ein Kopfsteinpflaster, handelt, bei dem plötzlich auftretende Beschleunigungswerte in vertikaler Richtung keine kritische Fahrsituation indizieren.

Vorzugsweise ist mit der Auslöseeinheit eine CAN-Schnittstelle zum Anschluss an einen CAN-Bussystem des Kraftfahrzeugs verbunden, um als Messdaten Daten des CAN-Bussystems zu erhalten. Über die CAN-Schnittstelle kann sich der Datenschreiber in den internen Kommunikations- und Messdatenfluss des Kraftfahrzeugs einklinken und sowieso gemessene Messdaten des Kraftfahrzeugs nutzen. Zusätzliche Sensoren oder Messgeräte sind nicht erforderlich. Zusätzliche Sensoren können vorgesehen sein, um einzelne Messdaten redundant zu messen und/oder die Messdaten unterschiedlicher Sensorsysteme für das gleiche Messdatum miteinander vergleichen zu können.

Besonders bevorzugt ist mit der Auslöseeinheit eine Videoschnittstelle für eine Videokamera zur Erfassung von Videobildern, insbesondere eines Fahrers in einem Kraftfahrzeuginnenraum und/oder einer Umgebung außerhalb des Kraftfahrzeugs, und/oder einer Audioschnittstelle für ein Mikrophon zur Erfassung von Tondaten, insbesondere des Kraftfahrzeuginnenraums, des Fahrers und/oder der Umgebung, verbunden. Aus den Video-und/oder Audiodaten können Informationen über das Verhalten des Fahrers vor, während und nach einer kritischen Fahrsituation erhalten werden. Bevorzugt ist mit der Auslöseeinheit eine Schnittstelle für Fahrzeugumgebungswahrnehmungssysteme, die bevorzugt auf Kameratechnik, Mikrophon-, Radar-, Ultraschall- und Lichttechnik basieren, verbunden. Besonders bevorzugt ist mit der Auslöseeinheit eine Videoschnittstelle für Videokameras zur Erfassung von Videobildern der nahen, mittleren und fernen Außenumgebung des Fahrzeuges verbunden. Dies ermöglicht es Erkenntnisse zu gewinnen, um das Kraftfahrzeug, Fahrerassistenzsysteme und/oder den Straßenbau so zu verbessern, dass eine ergonomische und an den Fahrer angepasste Umgebung erreicht wird, die ein richtiges Reagieren erleichtert und Unfälle vermeidet.

Die Erfindung betrifft ferner ein Kraftfahrzeugrückspiegel, der ein Spiegelgehäuse und einen Datenschreiber, der wie vorstehend beschrieben aus- und weitergebildet sein kann, aufweist. Der Datenschreiber ist ganz oder teilweise im Spiegelgehäuse angeordnet. Der Kraftfahrzeugrückspiegel befindet sich in einer Position, die insbesondere für den Erhalt von Video- und/oder Audiodaten besonders geeignet ist. Ferner ist der Datenschreiber oder Teile des Datenschreibers leicht zugänglich, so dass beispielsweise der Austausch eines Dauerspeichers schnell und leicht erfolgen kann.

Die Erfindung betrifft ferner ein Fahrerassistenzsystem zur Unterstützung des Fahrers eines Kraftfahrzeugs beim Fahren, das eine Auslöseeinheit zur Auslösung einer unterstützenden Maßnahme aufweist, wenn ein von einem Sensorsystem gemessenes Messdatum oder mehrere vom dem Sendersystem gemessene Messdaten einem dem jeweiligen Messdatum zugeordneten definierten Schwellwert zur Identifizierung einer kritischen Fahrsituation erreicht hat. Erfindungsgemäß ergeben sich die Schwellwerte losgelöst von anfänglichen Schwellwerten während der Fahrt kontinuierlich aus aktuell gemessenen Parametern als Ergebnis einer permanent fortschreitenden Rechnung auf Basis der gemessenen Parameter und/oder die Schwellwerte sind aus verschiedenen für unterschiedliche mögliche Fahrer hinterlegten Sätze an Schwellwerten ausgewählt und der mindestens eine Schwellwert ist in Abhängigkeit der gemessenen Messdaten automatisch derart anpassbar, dass unter Berücksichtigung eines sich über die gemessenen Messdaten bestimmten individuellen Fahrertypus und basierend auf der Annahme, dass im Wesentlichen unabhängig vom individuellen Fahrertypus die Anzahl kritischer Fahrsituationen im Wesentlichen gleich hoch ist, innerhalb eines definierten Intervalls eine voraussichtliche Zielanzahl an Auslösungen der Aufzeichnung erreichbar ist, wobei das Intervall ein Zeitintervall und/oder ein Fahrstreckenintervall ist. Durch die individuelle Anpassung der Schwellwerte an das Fahrverhalten des Fahrers mit der Maßgabe, dass eine bestimmte Anzahl an Auslösungen in einem bestimmten Intervall erreicht werden soll, kann deutlich valider eine tatsächlich kritische Fahrsituation identifiziert werden, die einen Eingriff des Fahrerassistenzsystems nötig macht. Diese Zielanzahl an unterstützenden Maßnahmen stellt dabei lediglich einen Richtwert dar, auf dessen Grundlage geeignete Schwellwerte bestimmt werden können. Es wird hierbei davon ausgegangen, dass auch bei mehreren Fahrern mit sehr unterschiedlichen Fahrverhalten die Anzahl der für den jeweiligen Fahrer kritischen Situationen konstant bleibt. Fahrer, bei denen sich häufig individuell als riskant erachtete Situationen ergeben, wollen diese zukünftig vermeiden und fahren daher in der Folge defensiver. Dagegen tendieren Fahrer, bei denen sich zunächst sehr wenige individuell als riskant erachtete Situationen ergeben, dazu in der Folge etwas aggressiver zu fahren. Es wird davon ausgegangen, dass sich somit die Anzahl der Situationen, in der ein Fahrer eine unterstützende Maßnahme wünscht, für alle Fahrertypen bei der gleichen Anzahl einpendelt. Für den Fall, dass in dem definierten Intervall beispielsweise eine höhere Anzahl an kritischen Situationen auftritt als erwartet, kann das Fahrerassistenzsystem dennoch eingreifen. In diesem Fall entspräche lediglich die tatsächliche Anzahl an unterstützenden Maßnahmen nicht dem beabsichtigten Richtwert. Die jeweils derzeitigen Schwellwerte können jedoch derart an das aktuelle Fahrverhalten angepasst werden, so dass zukünftig weiterhin die ursprünglich angestrebte Zielanzahl an unterstützenden Maßnahmen zu erwarten ist. Durch diese allmähliche individuelle Anpassung der Schwellwerte wird erreicht, dass sich für den jeweiligen Fahrer keine überraschenden Eingriffe des Fahrerassistenzsystems ergeben. Das Fahrerassistenzsystem kann insbesondere wie vorstehend anhand des Datenschreibers beschrieben aus- und weitergebildet sein.

Die Erfindung betrifft ferner ein Verfahren zur Identifikation von kritischen Fahrsituationen und/oder kritischen Zuständen, Veränderungen und Ereignissen von und an Komponenten eines Kraftfahrzeugs und/oder Kraftfahrzeugzuges und/oder zur Adaption an kritischen Fahrsituationen eines Kraftfahrzeugs. Bei dem Verfahren kann insbesondere ein Datenschreiber und/oder ein Fahrerassistenzsystem verwendet werden, die jeweils wie vorstehend beschriebenen aus- und weitergebildet sein können. Bei dem erfindungsgemäßen Verfahren werden für eine Fahrsituation relevante Messdaten erfasst. Auf Grundlage der erfassten Messdaten wird das durchschnittliche Fahrerverhalten bestimmt. Beispielsweise kann identifiziert werden, ob es sich um einen vorsichtigen oder einen aggressiven Fahrer handelt. In Abhängigkeit der gemessenen Messdaten werden ein oder mehrere Schwellwerte zur Identifizierung einer kritischen Fahrsituation, wobei die Schwellwerte jeweils einem Messdatum zugeordnet sind, an das durchschnittliche Fahrerverhalten angepasst. Eine Identifikation einer kritischen Fahrsituation erfolgt bei Erreichung eines kontinuierlich angepassten Schwellwerts und/oder mehrerer kontinuierlich angepasster Schwellwerte. Erfindungsgemäß ergeben sich die Schwellwerte losgelöst von anfänglichen Schwellwerten während der Fahrt kontinuierlich aus aktuell gemessenen Parametern als Ergebnis einer permanent fortschreitenden Rechnung auf Basis der gemessenen Parameter und/oder die Schwellwerte werden aus verschiedenen für unterschiedliche mögliche Fahrer hinterlegten Sätze an Schwellwerten ausgewählt werden und während eines definierten Intervalls wird die Anzahl der Erreichung eines Schwellwerts und/oder mehrerer Schwellwerte ermittelt und der mindestens eine Schwellwert in Abhängigkeit der gemessenen Messdaten automatisch derart angepasst, dass unter Berücksichtigung eines sich über die gemessenen Messdaten bestimmten individuellen Fahrertypus und basierend auf der Annahme, dass im Wesentlichen unabhängig vom individuellen Fahrertypus die Anzahl kritischer Fahrsituationen im Wesentlichen gleich hoch ist, innerhalb eines definierten Intervalls eine voraussichtliche Zielanzahl an Identifikation einer kritischen Fahrsituation erreichbar ist, wobei das Intervall ein Zeitintervall und/oder ein Fahrstreckenintervall ist.

Dadurch kann nach Ausmaß der Anpassung der Schwellwerte derart gewählt werden, dass innerhalb eines Intervalls, beispielsweise eines Zeitintervalls und/oder Fahrstreckenintervalls, eine bestimmte Anzahl an kritischen Fahrsituationen voraussichtlich identifiziert wird. Mit Hilfe des erfindungsgemäßen Identifikationsverfahrens ist es möglich nur dann eine kritische Fahrsituation zu identifizieren, wenn die Schwellwerte, welche die kritische Fahrsituation definieren, vorher an das individuelle Fahrverhalten des Fahrers angepasst wurden. Dies ermöglicht es nur solche Fahrsituationen als kritisch zu identifizieren, die für den jeweiligen Fahrer individuell gesehen tatsächlich kritisch sind. Hierbei wird berücksichtigt, dass für z.B. vorsichtig fahrende Fahrer und für dynamisch fahrende Fahrer unterschiedliche Fahrsituationen kritisch sind oder nicht. Die Identifikation von kritischen Fahrsituationen kann dadurch valider erfolgen. Die bessere Identifikation einer tatsächlich kritischen Fahrsituation kann in nachfolgenden Prozessen und/oder in anderen Geräten beispielsweise einem Datenschreiber zur Aufzeichnung kritischer Fahrsituationen und/oder einem Fahrerassistenzsystem zur Unterstützung des Fahrers eines Kraftfahrzeugs bei kritischen Fahrsituationen, genutzt werden.

Bei dem erfindungsgemäßen Identifikationsverfahren ist insbesondere eine Initialisierungsphase vorgesehen, während der nur die für eine Fahrsituation relevanten Messdaten erfasst werden. Anschließend kann auf Grundlage der gemessenen Messdaten das durchschnittliche Fahrverhalten bestimmt werden, bevor erstmalig eine kritische Fahrsituation identifiziert wird. Während der Initialisierungsphase kann also zunächst das Verhalten des Fahrers erlernt werden, um für den jeweiligen Fahrer individuelle Schwellwerte zu definieren. Insbesondere können die Schwellwerte zu Beginn besonders sensitiv eingestellt sein, so dass während der Initialisierungsphase eine besonders hohe Anzahl vermeintlich kritischer Fahrsituationen identifiziert werden kann. Allein die Anzahl der während der Initialisierungsphase identifizierten vermeintlichen kritischen Fahrsituationen ist bereits ein Maß für das vorsichtige oder aggressive Fahrverhalten eines Fahrers. Nach der Initialisierungsphase können die Schwellwerte weiterhin an den jeweiligen Fahrer angepasst werden, um beispielsweise auf eine zwischenzeitlich eingetretene Verhaltsänderung des Fahrers reagieren zu können. Dadurch entsprechen die aktuell eingestellten Schwellwerte dem aktuellen Fahrverhalten des Fahrers.

Besonders bevorzugt werden die erfassten Messdaten, die insbesondere ein Zeitintervall vor und nach der Identifikation einer kritischen Fahrsituation betreffen, auf einen Dauerspeicher gespeichert. Der Datenspeicher kann nach einem definierten Intervall, das insbesondere ein Zeitintervall und/oder ein Fahrstreckenintervall ist, zur Auswertung der gespeicherten Messdaten entnommen und vorzugsweise ausgetauscht werden. Auf Grundlage der gespeicherten Messdaten über die kritischen Fahrsituationen ist es möglich, real auftretende kritische Fahrsituationen auswerten zu können und aus den gewonnenen Erkenntnissen der Auswertung die Funktion von Fahrerassistenzsystemen oder anderer Kraftfahrzeugbauteile zu verbessern. Insbesondere ist es möglich das Verhalten von Fahrerassistenzsystemen zu überprüfen und oder geeignete Prüfverfahren für Fahrerassistenzsysteme zu entwickeln.

Nachfolgend wird die Erfindung unter Bezugnahme auf die anliegende Zeichnung anhand eines bevorzugten Ausführungsbeispiels exemplarisch erläutert.

Es zeigt:

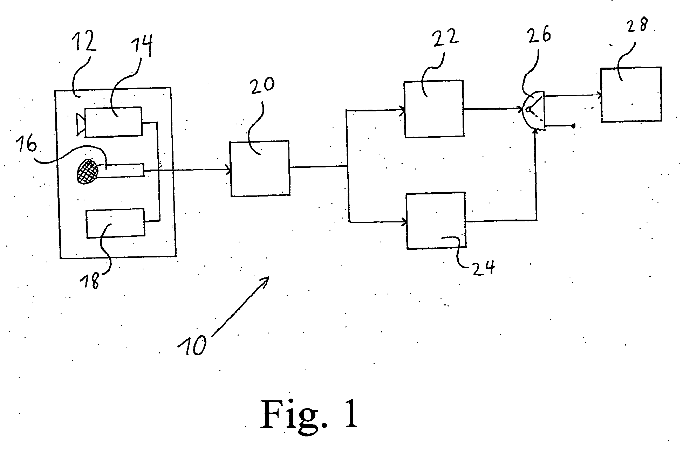

- Fig. 1:: ein schematisches Blockschaltbild eines erfindungsgemäßen Datenschreibers.

Der in Fig. 1 dargestellte Datenschreiber 10 weist ein Sensorsystem 12 auf, das mindestens eine Videokamera 14, beispielsweise für innen und/oder außen, ein Mikrophon 16 und/oder weitere Messeinrichtungen 18 für verschiedene Kraftfahrzeugparameter aufweisen kann. Die von dem Sensorsystem 12 erhältlichen Messdaten können von einem Analog/digital-Wandler 20 in sequenzielle computerlesbare Daten umgewandelt werden, sofern die Messdaten noch nicht in einem computerlesbaren Format vorliegen sollten. Diese Daten können in einem Ringspeicher 22 kontinuierlich gespeichert werden, wobei ältere Daten von jüngeren Daten überschrieben werden können. Die computerlesbare Daten können ferner in einer Auswertereinheit 24 ausgewertet werden und daraufhin überprüft werden, ob bestimmte Schwellwerte erreicht sind, die eine kritische Fahrsituation identifizieren. Wenn dies der Fall ist, wird eine Auslösereinheit 26 betätigt, um Daten, die zeitlich vor der Auslösung liegen aus dem Kurzzeitspeicher oder Ringspeicher 22 in einen Dauerspeicher 28 zu kopieren und aktuelle Messdaten über die aktuell detektierte kritische Fahrsituation zu speichern. Der Dauerspeicher 28 ist austauschbar und kann zu Ausweitungszwecken aus dem Datenschreiber 10 entfernt werden.

## Patentansprüche

1. Datenschreiber zur Aufzeichnung von kritischen Fahrsituationen und/oder kritischen Zuständen, Veränderungen und Ereignissen von und an Komponenten eines Kraftfahrzeugs und/oder Kraftfahrzeugzuges mit
einer Auslöseeinheit (26) zur Auslösung einer Aufzeichnung von für eine Fahrsituation relevanten Messdaten eines Sensorsystems (12), wenn ein von dem Sensorsystem (12) gemessenes Messdatum oder mehrere von dem Sensorsystem (12) gemessene Messdaten einen dem jeweiligen Messdatum zugeordneten definierten Schwellwert und/oder dem einer Kombination von Messdaten zugeordneten Schwellwert zur Identifizierung einer kritischen Fahrsituation erreicht hat,
wobei der mindestens eine Schwellwert in Abhängigkeit der gemessenen Messdaten automatisch an das durchschnittliche Fahrerverhalten anpassbar ist,
**dadurch gekennzeichnet, dass**
sich die Schwellwerte losgelöst von anfänglichen Schwellwerten während der Fahrt kontinuierlich aus aktuell gemessenen Parametern als Ergebnis einer permanent fortschreitenden Rechnung auf Basis der gemessenen Parameter ergeben und/oder die Schwellwerte aus verschiedenen für unterschiedliche mögliche Fahrer hinterlegten Sätze an Schwellwerten ausgewählt sind und
der mindestens eine Schwellwert in Abhängigkeit der gemessenen Messdaten automatisch derart anpassbar ist, dass unter Berücksichtigung eines sich über die gemessenen Messdaten bestimmten individuellen Fahrertypus und basierend auf der Annahme, dass im Wesentlichen unabhängig vom individuellen Fahrertypus die Anzahl kritischer Fahrsituationen im Wesentlichen gleich hoch ist, innerhalb eines definierten Intervalls eine voraussichtliche Zielanzahl an Auslösungen der Aufzeichnung erreichbar ist, wobei das Intervall ein Zeitintervall und/oder ein Fahrstreckenintervall ist.

2. Datenschreiber nach Anspruch 1 **dadurch gekennzeichnet, dass** eine kritische Fahrsituation erstmalig nach einer Initialisierungsphase, in welcher nur die für eine Fahrsituation relevanten Messdaten erfasst werden und anschließend das durchschnittliche Fahrverhalten bestimmt wird, identifizierbar ist.

3. Datenschreiber nach Anspruch 1 oder 2 **dadurch gekennzeichnet, dass** über die gemessenen Messdaten eine Variation von Effekten von Komponenten des Kraftfahrzeugs in Abhängigkeit von Zeit und/oder Laufleistung des Kraftfahrzeugs bei einem Fremdeingriff und/oder in einer kritischen Fahrsituation berechenbar ist.

4. Datenschreiber nach einem der Ansprüche 1 bis 3 **dadurch gekennzeichnet, dass** das Intervall ein Zeitintervall und/oder ein Fahrstreckenintervall ist, das in Abhängigkeit der gemessenen Messdaten, vorzugsweise einer Fahrgeschwindigkeit, gewichtet ist.

5. Datenschreiber nach einem der Ansprüche 1 bis 4 **dadurch gekennzeichnet, dass** die Auslöseeinheit (26) mit einem Dauerspeicher (28) zur dauerhaften Speicherung der gemessenen Messdaten verbunden ist, wobei der Dauerspeicher (28) mit einem Kurzzeitspeicher (22), insbesondere einem Ringspeicher, zur kontinuierlichen Speicherung der Messdaten des Sensorsystems (12) verbunden ist und der Dauerspeicher (26) derart ausgestaltet ist, dass der Dauerspeicher (26) bei einer Auslösung durch die Auslöseeinheit (26) Daten von dem Kurzzeitspeicher (22) aufzeichnet, die zeitlich vor der Auslösung im Kurzzeitspeicher (22) gespeichert wurden.

6. Datenschreiber nach Anspruch 5 **dadurch gekennzeichnet, dass** der Dauerspeicher (26) als austauschbares Modul ausgestaltet ist.

7. Datenschreiber nach einem der Ansprüche 1 bis 6 **dadurch gekennzeichnet, dass** die zur Aufzeichnung vorgesehenen Messdaten kabellos übertragbar sind.

8. Datenschreiber nach einem der Ansprüche 1 bis 7 **dadurch gekennzeichnet, dass** Schwellwerte definiert sind für die Parameter des Kraftfahrzeugs: Gierrate und/oder Gierwinkel und/oder Nickrate und/oder Nickwinkel und/oder Wankrate und/oder Wankwinkel und/oder Kraftfahrzeuggeschwindigkeit und/oder Längsbeschleunigung und/oder Querbeschleunigung und/oder Vertikalbeschleunigung und/oder Winkelstellung eines Lenkrad und/oder Winkelgeschwindigkeit des Lenkrads und/oder Winkelbeschleunigung des Lenkrads und/oder Bremspedalstellung und/oder Bremspedalgeschwindigkeit und/oder Bremspedalbeschleunigung und/oder Fahrpedalstellung und/oder Fahrpedalgeschwindigkeit und/oder Fahrpedalbeschleunigung und/oder manuelle Betätigung eines Hilfssystems, insbesondere einer Hupe, und/oder Eingriff eines Fahrerassistenzsystems und/oder globale Positionsdaten und/oder Raddrehzahl der Raddrehzahlsensoren und/oder Motordrehzahl und/oder Motormoment und/oder geschalteter Getriebegang.

9. Datenschreiber nach einem der Ansprüche 1 bis 8 **dadurch gekennzeichnet, dass** eine CAN-Schnittstelle zum Anschluss an ein CAN-Bussystems des Kraftfahrzeugs mit der Auslöseeinheit (26) verbunden ist, um als Messdaten Daten des CAN-Bussystems zu erhalten.

10. Datenschreiber nach einem der Ansprüche 1 bis 9 **dadurch gekennzeichnet, dass** eine Videoschnittstelle für eine Videokamera (14) zur Erfassung von Videobildern, insbesondere eines Fahrers in einem Kraftfahrzeuginnenraum und/oder einer Umgebung außerhalb des Kraftfahrzeugs, und/oder eine Audioschnittstelle für ein Mikrofon (16) zur Erfassung von Tondaten, insbesondere des Kraftfahrzeuginnenraums, des Fahrers und/oder der Umgebung, mit der Auslöseeinheit (26) verbunden ist.

11. Kraftfahrzeugrückspiegel mit einem Spiegelgehäuse und einem Datenschreiber (10) nach einem der Ansprüche 1 bis 10, wobei der Datenschreiber (10) ganz oder teilweise in dem Spiegelgehäuse angeordnet ist.

12. Fahrerassistenzsystem zur Unterstützung des Fahrers eines Kraftfahrzeugs beim Fahren, mit
einer Auslöseeinheit (26) zur Auslösung einer unterstützenden Maßnahme, wenn ein von einem Sensorsystem (12) gemessenes Messdatum oder mehrere von dem Sensorsystem (12) gemessene Messdaten einen dem jeweiligen Messdatum zugeordneten definierten Schwellwert zur Identifizierung einer kritischen Fahrsituation erreicht hat,
**dadurch gekennzeichnet, dass**
sich die Schwellwerte losgelöst von anfänglichen Schwellwerten während der Fahrt kontinuierlich aus aktuell gemessenen Parametern als Ergebnis einer permanent fortschreitenden Rechnung auf Basis der gemessenen Parameter ergeben und/oder die Schwellwerte aus verschiedenen für unterschiedliche mögliche Fahrer hinterlegten Sätze an Schwellwerten ausgewählt sind und
der mindestens eine Schwellwert in Abhängigkeit der gemessenen Messdaten automatisch derart anpassbar ist, dass unter Berücksichtigung eines sich über die gemessenen Messdaten bestimmten individuellen Fahrertypus und basierend auf der Annahme, dass im Wesentlichen unabhängig vom individuellen Fahrertypus die Anzahl kritischer Fahrsituationen im Wesentlichen gleich hoch ist, innerhalb eines definierten Intervalls eine voraussichtliche Zielanzahl an Auslösungen der Aufzeichnung erreichbar ist, wobei das Intervall ein Zeitintervall und/oder ein Fahrstreckenintervall ist.

13. Fahrerassistenzsystem nach Anspruch 12 **dadurch gekennzeichnet, dass** eine kritische Fahrsituation erstmalig nach einer Initialisierungsphase, in welcher nur die für eine Fahrsituation relevanten Messdaten erfasst werden und anschließend das durchschnittliche Fahrverhalten bestimmt wird, identifizierbar ist.

14. Verfahren zur Identifikation von kritischen Fahrsituationen und/oder kritischen Zuständen, Veränderungen und Ereignissen von und an Komponenten eines Kraftfahrzeugs und/oder Kraftfahrzeugzuges und/oder zur Adaption an kritischen Fahrsituationen eines Kraftfahrzeugs, bei dem insbesondere ein Datenschreiben (10) nach einem der Ansprüche 1 bis 10 und/oder ein Fahrerassistenzsystem nach Anspruch 12 verwendet wird, mit den Schritten:
Erfassen von für eine Fahrsituation relevanten Messdaten,
Bestimmung eines durchschnittlichen Fahrerverhaltens auf Grundlage der erfassten Messdaten,
Anpassen von einem oder mehreren Schwellwerten zur Identifizierung einer kritischen Fahrsituation, wobei die Schwellwerte jeweils einem Messdatum zugeordnet sind, in Abhängigkeit der gemessenen Messdaten an das durchschnittliche Fahrerverhalten und
Identifikation einer kritischen Fahrsituation bei Erreichung eines angepassten Schwellwerts und/oder mehrerer angepasster Schwellwerte,
**dadurch gekennzeichnet, dass**
sich die Schwellwerte losgelöst von anfänglichen Schwellwerten während der Fahrt kontinuierlich aus aktuell gemessenen Parametern als Ergebnis einer permanent fortschreitenden Rechnung auf Basis der gemessenen Parameter ergeben und/oder die Schwellwerte aus verschiedenen für unterschiedliche mögliche Fahrer hinterlegten Sätze an Schwellwerten ausgewählt werden und
während eines definierten Intervalls die Anzahl der Erreichung eines Schwellwerts und/oder mehrerer Schwellwerte ermittelt wird und der mindestens eine Schwellwert in Abhängigkeit der gemessenen Messdaten automatisch derart angepasst wird, dass unter Berücksichtigung eines sich über die gemessenen Messdaten bestimmten individuellen Fahrertypus und basierend auf der Annahme, dass im Wesentlichen unabhängig vom individuellen Fahrertypus die Anzahl kritischer Fahrsituationen im Wesentlichen gleich hoch ist, innerhalb des definierten Intervalls eine voraussichtliche Zielanzahl an Identifikation einer kritischen Fahrsituation erreichbar ist, wobei das Intervall ein Zeitintervall und/oder ein Fahrstreckenintervall ist.

15. Verfahren nach Anspruch 14, bei dem während einer Initialisierungsphase nur die für eine Fahrsituation relevanten Messdaten erfasst werden und anschließend das durchschnittliche Fahrverhalten bestimmt wird, bevor erstmalig eine kritische Fahrsituation identifiziert wird.

## Claims

1. Data recorder for recording critical driving situations and/or critical states, alterations and events from and on components of a motor vehicle and/or motor vehicle train having
an initiation unit (26) for initiating a recording of measurement data from a sensor system (12) that are relevant to a driving situation when a measurement datum measured by the sensor system (12) or multiple measurement data measured by the sensor system (12) has/have reached a defined threshold value, associated with the respective measurement datum, and/or the threshold value associated with a combination of measurement data for identifying a critical driving situation,
wherein the at least one threshold value is automatically adjustable to suit the average driver behaviour on the basis of the measured measurement data,
**characterized in that**
the threshold values are continuously obtained, in a manner isolated from initial threshold values, during the journey from currently measured parameters as the result of a constantly progressing computation on the basis of the measured parameters, and/or the threshold values are selected from different sets of threshold values that are stored for various possible drivers, and
the at least one threshold value is automatically adjustable on the basis of the measured measurement data such that by taking account of an individual driver type that is determined by means of the measured measurement data, and on the basis of the assumption that the number of critical driving situations is essentially at the same level essentially irrespective of the individual driver type, it is possible to achieve a probable target number of initiations of the recording within a defined interval, the interval being an interval of time and/or an interval of distance.

2. Data recorder according to Claim 1, **characterized in that** a critical driving situation is identifiable for the first time after an initialization phase, in which only the measurement data that are relevant to a driving situation are captured and then the average driving behaviour is determined.

3. Data recorder according to Claim 1 or 2, **characterized in that** the measured measurement data render computable a variation in effects of components of the motor vehicle on the basis of time and/or mileage of the motor vehicle in the event of an extraneous intervention and/or in a critical driving situation.

4. Data recorder according to one of Claims 1 to 3, **characterized in that** the interval is an interval of time and/or an interval of distance that is weighted on the basis of the measured measurement data, preferably a speed of travel.

5. Data recorder according to one of Claims 1 to 4, **characterized in that** the initiation unit (26) is connected to a non-volatile memory (28) for permanently storing the measured measurement data, wherein the non-volatile memory (28) is connected to a volatile memory (22), particularly a ring memory, for continuously storing the measurement data from the sensor system (12), and the non-volatile memory (26) is embodied such that the non-volatile memory (26) is prompted by an initiation by the initiation unit (26) to record data from the volatile memory (22) that have been stored in the volatile memory (22) at a time prior to the initiation.

6. Data recorder according to Claim 5, **characterized in that** the non-volatile memory (26) is embodied as an interchangeable module.

7. Data recorder according to one of Claims 1 to 6, **characterized in that** the measurement data provided for recording are wirelessly transmittable.

8. Data recorder according to one of Claims 1 to 7, **characterized in that** threshold values are defined for the parameters of the motor vehicle: yaw rate and/or yaw angle and/or pitch rate and/or pitch angle and/or roll rate and/or roll angle and/or motor vehicle speed and/or longitudinal acceleration and/or transverse acceleration and/or vertical acceleration and/or angular position of a steering wheel and/or angular speed of the steering wheel and/or angular acceleration of the steering wheel and/or brake pedal position and/or brake pedal speed and/or brake pedal acceleration and/or accelerator pedal position and/or accelerator pedal speed and/or accelerator pedal acceleration and/or manual operation of an auxiliary system, particularly a horn, and/or intervention of a driver assistance system and/or global position data and/or wheel speed from the wheel speed sensors and/or engine speed and/or engine torque and/or selected gear.

9. Data recorder according to one of Claims 1 to 8, **characterized in that** a CAN interface for connection to a CAN bus system of the motor vehicle is connected to the initiation unit (26) in order to obtain data from the CAN bus system as measurement data.

10. Data recorder according to one of Claims 1 to 9, **characterized in that** a video interface for a video camera (14) for capturing video images, particularly of a driver in a motor vehicle interior and/or of surroundings outside the motor vehicle, and/or an audio interface for a microphone (16) for capturing audio data, particularly from the motor vehicle interior, from the driver and/or from the surroundings, is/are connected to the initiation unit (26).

11. Motor vehicle rear-view mirror having a mirror housing and a data recorder (10) according to one of Claims 1 to 10, wherein the data recorder (10) is entirely or partially arranged in the mirror housing.

12. Driver assistance system for assisting the driver of a motor vehicle in driving, having
an initiation unit (26) for initiating an assisting measure when a measurement datum measured by a sensor system (12) or multiple measurement data measured by the sensor system (12) has/have reached a defined threshold value, associated with the respective measurement datum, for identifying a critical driving situation,
**characterized in that**
the threshold values are continuously obtained, in a manner isolated from initial threshold values, during the journey from currently measured parameters as the result of a constantly progressing computation on the basis of the measured parameters, and/or the threshold values are selected from different sets of threshold values that are stored for various possible drivers, and
the at least one threshold value is automatically adjustable on the basis of the measured measurement data such that by taking account of an individual driver type that is determined by means of the measured measurement data, and on the basis of the assumption that the number of critical driving situations is essentially at the same level essentially irrespective of the individual driver type, it is possible to achieve a probable target number of initiations of the recording within a defined interval, the interval being an interval of time and/or an interval of distance.

13. Driver assistance system according to Claim 12, **characterized in that** a critical driving situation is identifiable for the first time after an initialization phase, in which only the measurement data that are relevant to a driving situation are captured and then the average driving behaviour is determined.

14. Method for identifying critical driving situations and/or critical states, alterations and events from and on components of a motor vehicle and/or motor vehicle train and/or for adapting to critical driving situations of a motor vehicle, in which particularly a data recorder (10) according to one of Claims 1 to 10 and/or a driver assistance system according to Claim 12 is/are used, having the steps of:
capture of measurement data that are relevant to a driving situation,
determination of an average driver behaviour on the basis of the captured measurement data,
adjustment of one or more threshold values for identifying a critical driving situation, wherein the threshold values are each associated with a measurement datum, on the basis of the measured measurement data to suit the average driver behaviour, and
identification of a critical driving situation when an adjusted threshold value and/or multiple adjusted threshold values is/are reached,
**characterized in that**
the threshold values are continuously obtained, in a manner isolated from initial threshold values, during the journey from currently measured parameters as the result of a constantly progressing computation on the basis of the measured parameters, and/or the threshold values are selected from different sets of threshold values that are stored for various possible drivers, and
during a defined interval, the number of times a threshold value and/or multiple threshold values is/are reached is ascertained and the at least one threshold value is automatically adjusted on the basis of the measured measurement data such that by taking account of an individual driver type that is determined by means of the measured measurement data, and on the basis of the assumption that the number of critical driving situations is essentially at the same level essentially irrespective of the individual driver type, it is possible to achieve a probable target number of identifications of a critical driving situation within the defined interval, the interval being an interval of time and/or an interval of distance.

15. Method according to Claim 14, in which during an initialization phase, only the measurement data that are relevant to a driving situation are captured and then the average driving behaviour is determined before a critical driving situation is identified for the first time.

## Revendications

1. Enregistreur de données destiné à enregistrer des situations de conduite critiques et/ou des états critiques, des modifications et des événements de et sur des composants d'un véhicule automobile et/ou d'un train de véhicules automobiles, comprenant
une unité de déclenchement (26) destinée à déclencher un enregistrement de données de mesure d'un système de détection (12) pertinentes pour une situation de conduite lorsque l'une des données de mesure mesurées par le système de détection (12) ou plusieurs données de mesure mesurées par le système de détection (12) a/ont atteint une valeur de seuil définie associée à la donnée de mesure respective et/ou une valeur de seuil associée à une combinaison de données de mesure en vue d'identifier une situation de conduite critique,
l'au moins une valeur de seuil pouvant être adaptée automatiquement au comportement de conduite moyen en fonction des données de mesure mesurées,
**caractérisé en ce que**
les valeurs de seuil, détachées des valeurs de seuil initiales, sont obtenues continuellement pendant la conduite à partir de paramètres mesurés actuels en tant que résultat d'un calcul progressif permanent sur la base des paramètres mesurés et/ou les valeurs de seuil sont sélectionnées parmi différents jeux de valeurs de seuil enregistrés pour différents conducteurs possibles, et l'au moins une valeur de seuil peut être adaptée automatiquement en fonction des données de mesure mesurées de telle sorte qu'en tenant compte d'un type de conducteur individuel déterminé par le biais des données de mesure mesurées et en se basant sur l'hypothèse selon laquelle le nombre de situations de conduite critiques est pour l'essentiel identique pour l'essentiel indépendamment du type de conducteur individuel, un nombre cible probable de déclenchements de l'enregistrement peut être atteint à l'intérieur d'un intervalle défini, l'intervalle étant un intervalle de temps et/ou un intervalle de trajets.

2. Enregistreur de données selon la revendication 1, **caractérisé en ce qu'**une situation de conduite critique peut être identifiée une première fois après une phase d'initialisation dans laquelle seules sont acquises les données de mesure pertinentes pour une situation de conduite et le comportement de conduite moyen est ensuite déterminé.

3. Enregistreur de données selon la revendication 1 ou 2, **caractérisé en ce qu'**une variation des effets des composants du véhicule automobile peut être calculée par le biais des données de mesure mesurées en fonction du temps et/ou du kilométrage du véhicule automobile lors d'une intervention externe et/ou d'une situation de conduite critique.

4. Enregistreur de données selon l'une des revendications 1 à 3, **caractérisé en ce que** l'intervalle est un intervalle de temps et/ou un intervalle de trajets qui est pondéré en fonction des données de mesure mesurées, de préférence d'une vitesse de déplacement.

5. Enregistreur de données selon l'une des revendications 1 à 4, **caractérisé en ce que** l'unité de déclenchement (26) est reliée à une mémoire permanente (28) destinée à la mise en mémoire permanente des données de mesure mesurées, la mémoire permanente (28) étant reliée à une mémoire à court terme (22), notamment une mémoire tampon circulaire, destinée à la mise en mémoire en continu des données de mesure du système de détection (12) et la mémoire permanente (26) est configurée de telle sorte que lors d'un déclenchement par l'unité de déclenchement (26), la mémoire permanente (26) enregistre les données de la mémoire à court terme (22) qui ont été mises en mémoire dans la mémoire à court terme (22) chronologiquement avant le déclenchement.

6. Enregistreur de données selon la revendication 5, **caractérisé en ce que** la mémoire permanente (26) est réalisée sous la forme d'un module interchangeable.

7. Enregistreur de données selon l'une des revendications 1 à 6, **caractérisé en ce que** les données de mesures prévues pour l'enregistrement peuvent être transmises sans fil.

8. Enregistreur de données selon l'une des revendications 1 à 7, **caractérisé en ce que** les valeurs de seuil sont définies pour les paramètres suivants du véhicule automobile : taux de lacet et/ou angle de lacet et/ou taux de tangage et/ou angle de tangage et/ou taux de vacillement et/ou angle de vacillement et/ou vitesse du véhicule automobile et/ou accélération longitudinale et/ou accélération transversale et/ou accélération verticale et/ou position angulaire d'un volant de direction et/ou vitesse angulaire du volant de direction et/ou accélération angulaire du volant de direction et/ou position de la pédale de frein et/ou vitesse de la pédale de frein et/ou accélération de la pédale de frein et/ou position de la pédale d'accélérateur et/ou vitesse de la pédale d'accélérateur et/ou accélération de la pédale d'accélérateur et/ou actionnement manuel d'un système auxiliaire, notamment un klaxon, et/ou intervention d'un système d'assistance au conducteur et/ou données de position globales et/ou vitesse de rotation de roue des capteurs de vitesse de rotation de roue et/ou vitesse de rotation du moteur et/ou couple du moteur et/ou rapport de boîte de vitesses engagé.

9. Enregistreur de données selon l'une des revendications 1 à 8, **caractérisé en ce qu'**une interface CAN destinée à être raccordée à un système de bus CAN du véhicule automobile est reliée à l'unité de déclenchement (26) afin d'obtenir les données du système de bus CAN en tant que données de mesure.

10. Enregistreur de données selon l'une des revendications 1 à 9, **caractérisé en ce qu'**une interface vidéo pour une caméra vidéo (14) destinée à acquérir des images vidéo, notamment d'un conducteur dans un espace intérieur de véhicule automobile et/ou d'un environnement à l'extérieur du véhicule automobile, et/ou une interface audio pour un microphone (16) destiné à acquérir des données sonores, notamment de l'espace intérieur de véhicule automobile, du conducteur et/ou de l'environnement, est reliée à l'unité de déclenchement (26).

11. Rétroviseur de véhicule automobile pourvu d'un boîtier de miroir et d'un enregistreur de données (10) selon l'une des revendications 1 à 10, l'enregistreur de données (10) étant entièrement ou partiellement disposé dans le boîtier de miroir.

12. Système d'assistance au conducteur destiné à assister le conducteur d'un véhicule automobile lors de la conduite, comprenant
une unité de déclenchement (26) destinée à déclencher une mesure d'assistance lorsqu'une donnée de mesure mesurée par un système de détection (12) ou plusieurs données de mesure mesurées par le système de détection (12) a/ont atteint une valeur de seuil définie associée à la donnée de mesure respective en vue d'identifier une situation de conduite critique,
**caractérisé en ce que**
les valeurs de seuil, détachées des valeurs de seuil initiales, sont obtenues continuellement pendant la conduite à partir de paramètres mesurés actuels en tant que résultat d'un calcul progressif permanent sur la base des paramètres mesurés et/ou les valeurs de seuil sont sélectionnées parmi différents jeux de valeurs de seuil enregistrés pour différents conducteurs possibles, et l'au moins une valeur de seuil peut être adaptée automatiquement en fonction des données de mesure mesurées de telle sorte qu'en tenant compte d'un type de conducteur individuel déterminé par le biais des données de mesure mesurées et en se basant sur l'hypothèse selon laquelle le nombre de situations de conduite critiques est pour l'essentiel identique pour l'essentiel indépendamment du type de conducteur individuel, un nombre cible probable de déclenchements de l'enregistrement peut être atteint à l'intérieur d'un intervalle défini, l'intervalle étant un intervalle de temps et/ou un intervalle de trajets.

13. Système d'assistance au conducteur selon la revendication 12, **caractérisé en ce qu'**une situation de conduite critique peut être identifiée une première fois après une phase d'initialisation dans laquelle seules sont acquises les données de mesure pertinentes pour une situation de conduite et le comportement de conduite moyen est ensuite déterminé.

14. Procédé d'identification de situations de conduite critiques et/ou d'états critiques, de modifications et d'événements de et sur des composants d'un véhicule automobile et/ou d'un train de véhicules automobiles et/ou d'adaptation à des situations de conduite critiques d'un véhicule automobile, avec lequel est notamment utilisé un enregistreur de données (10) selon l'une des revendications 1 à 10 et/ou un système d'assistance au conducteur selon la revendication 12, comprenant les étapes suivantes :
acquisition de données de mesure pertinentes pour une situation de conduite,
détermination d'un comportement de conduite moyen en se basant sur les données de mesure acquises,
adaptation d'une ou plusieurs valeurs de seuil destinées à l'identification d'une situation de conduite critique,
les valeurs de seuil étant respectivement associées à une donnée de mesure, au comportement de conduite moyen en fonction des données de mesure mesurées, et
identification d'une situation de conduite critique lors de l'atteinte d'une valeur de seuil adaptée et/ou de plusieurs valeurs de seuil adaptées,
**caractérisé en ce que**
les valeurs de seuil, détachées des valeurs de seuil initiales, sont obtenues continuellement pendant la conduite à partir de paramètres mesurés actuels en tant que résultat d'un calcul progressif permanent sur la base du paramètre mesuré et/ou les valeurs de seuil sont sélectionnées parmi différents jeux de valeurs de seuil enregistrés pour différents conducteurs possibles, et le nombre de fois où une valeur de seuil et/ou plusieurs valeurs de seuil a/ont été atteinte(s) est déterminé pendant un intervalle défini et l'au moins une valeur de seuil est adaptée automatiquement en fonction des données de mesure mesurées de telle sorte qu'en tenant compte d'un type de conducteur individuel déterminé par le biais des données de mesure mesurées et en se basant sur l'hypothèse selon laquelle le nombre de situations de conduite critiques est pour l'essentiel identique pour l'essentiel indépendamment du type de conducteur individuel, un nombre cible probable d'identifications d'une situation de conduite critique peut être atteint à l'intérieur de l'intervalle défini, l'intervalle étant un intervalle de temps et/ou un intervalle de trajets.

15. Procédé selon la revendication 14, avec lequel, pendant une phase d'initialisation, seules sont acquises les données de mesure pertinentes pour une situation de conduite et le comportement de conduite moyen est ensuite déterminé avant qu'une situation de conduite critique soit identifiée une première fois.
